# EUROPEAN PATENT SPECIFICATION

(11) **EP 4 142 009 B1**
(45) Date of publication and mention of the grant of the patent: **30.07.2025**
(21) Application number: 22791896.8
(22) Date of filing: 21.03.2022
(51) Int. Cl.: H01M 10/0567, H01M 10/052, H01M 4/38, H01M 10/0568, H01M 10/0569

(54) **ELECTROLYTE SOLUTION FOR LITHIUM-SULFUR SECONDARY BATTERY, AND LITHIUM-SULFUR SECONDARY BATTERY COMPRISING SAME**
ELEKTROLYTLÖSUNG FÜR LITHIUM-SCHWEFEL-SEKUNDÄRBATTERIE UND LITHIUM-SCHWEFEL-SEKUNDÄRBATTERIE DAMIT
SOLUTION ÉLECTROLYTIQUE POUR BATTERIE SECONDAIRE AU LITHIUM-SOUFRE ET BATTERIE SECONDAIRE AU LITHIUM-SOUFRE LA COMPRENANT

(30) Priority: 19.04.2021 KR 20210050433
(43) Date of publication of application: 01.03.2023
(73) Proprietor: LG Energy Solution, Ltd., Seoul 07335 (KR)
(72) Inventor: LEE, Jaegil, Daejeon 34122 (KR); KIM, Eui Tae, Daejeon 34122 (KR); JUNG, Unho, Daejeon 34122 (KR)
(74) Representative: Goddar, Heinz J.
(86) International application number: PCT/KR2022/003871
(87) International publication number: WO 2022/225196

(56) References cited:
- JP-A- 2003 338 317
- KR-A- 20060 063 035
- KR-A- 20120 091 627
- KR-A- 20200 016 045
- KR-A- 20200 016 045
- KR-A- 20200 032 096
- US-A1- 2007 275 306
- US-A1- 2013 130 128
- US-A1- 2021 020 990
- US-B2- 8 691 448

## Description

### [Technical Field]

The present invention relates to an electrolyte solution for a lithium-sulfur secondary battery and a lithium-sulfur secondary battery comprising the same.

### [Background Art]

As the application area of secondary battery expands to the electric vehicles (EV) or the energy storage devices (ESS), the lithium-ion secondary battery with relatively low weight-to-energy storage density (~ 250 Wh/kg) are facing limitations in application to such products. Alternatively, since the lithium-sulfur secondary battery can achieve the theoretically high weight-to-energy storage density (~ 2,600 Wh/kg), it is attracting attention as a next-generation secondary battery technology.

The lithium-sulfur secondary battery means a battery system using a sulfur-based material having a sulfur-sulfur bond (S-S bond) as a positive electrode active material and using lithium metal as a negative electrode active material. Sulfur, which is the main material of the positive electrode active material, has advantages that it is very rich in resources, is not toxic, and has a low atomic weight.

In the lithium-sulfur secondary battery, when discharging the battery, lithium which is a negative electrode active material is oxidized while releasing electron and thus ionizing, and the sulfur-based material which is a positive electrode active material is reduced while accepting the electron. In that case, the oxidation reaction of lithium is a process by which lithium metal releases electron and is converted to lithium cation form. In addition, the reduction reaction of sulfur is a process by which the S-S bond accepts two electrons and is converted to a sulfur anion form. The lithium cation produced by the oxidation reaction of lithium is transferred to the positive electrode through the electrolyte and is combined with the sulfur anion generated by the reduction reaction of sulfur to form a salt. Specifically, sulfur before discharging has a cyclic S₈ structure, which is converted to lithium polysulfide (LiSₓ) by the reduction reaction. When the lithium polysulfide is completely reduced, lithium sulfide (Li₂S) is produced.

Sulfur, which is a positive electrode active material, is difficult to secure reactivity with electrons and lithium ions in a solid state due to its low electrical conductivity characteristics. In the existing lithium-sulfur secondary battery, in order to improve the reactivity of sulfur, an intermediate polysulfide in the form of Li₂Sₓ is generated to induce a liquid phase reaction and improve the reactivity. In this case, an ether-based solvent such as dioxolane and dimethoxy ethane, which are highly soluble for lithium polysulfide, is used as a solvent for the electrolyte solution.

However, if such an ether-based solvent is used, there are problems that the lifetime characteristics of the lithium-sulfur secondary battery are deteriorated due to various causes. For example, the lifetime characteristics of the lithium-sulfur secondary battery may be deteriorated by the leaching of lithium polysulfide from the positive electrode, the occurrence of a short due to the growth of dendrites on the lithium negative electrode, and the deposition of by-products from the decomposition of the electrolyte solution, etc.

In particular, if such an ether-based solvent is used, it has high reactivity because it can dissolve a large amount of the lithium polysulfide, but due to the characteristics of the lithium polysulfide dissolved in the electrolyte solution, the reactivity and lifetime characteristics of sulfur are affected by the content of the electrolyte solution.

Recently, in order to develop a lithium-sulfur secondary battery having a high energy density of 500Wh/kg or more, which is required for aircraft and next-generation electric vehicles, it is required that the loading amount of sulfur in the electrode is large and the content of the electrolyte solution is minimized.

However, due to the characteristics of the ether-based solvent, there is a problem that as the content of the electrolyte solution is decreased, the viscosity is increased rapidly during charging/discharging, and thus the overvoltage may occur and the battery may be deteriorated.

Therefore, in order to prevent decomposition of the electrolyte solution and secure excellent lifetime characteristics, researches to add an additive are continuously being conducted. Nevertheless, the components and composition of the electrolyte solution that can prevent decomposition of the electrolyte solution and improve lifetime characteristics have not been clearly identified. In particular, it is not known in detail about the components and composition of the electrolyte solution suitable for the case of a pouch cell with a very small content of the electrolyte solution.

### [Prior Art Document]

### [Patent Document]

(Patent Document 1) Korean Laid-open Patent Publication No. 10-2007-0027512 (March 09, 2007), "ELECTROLYTES FOR LITHIUM-SULFUR ELECTROCHEMICAL CELLS"

US 2013/130 128 A1 discloses a non-aqueous electrolytic solution which uses a methylene-bis-sulfonate derivative; a method for producing the non-aqueous electrolytic solution; and a battery which uses the electrolytic solution. The non-aqueous electrolytic solution comprises (1) a non-aqueous solvent comprising at least one selected from a cyclic carbonate ester, a straight chained carbonate ester and a cyclic carboxylic acid ester, (2) a lithium salt which may be dissolved in the non-aqueous solvent, as an electrolyte salt, (3) a methylene-bis-sulfonate derivative. The method for producing the non-aqueous electrolytic solution is characterized by dissolving a lithium salt in a non-aqueous solvent, and then dissolving the methylene-bis-sulfonate derivative.

US 8 691 448 B2 provides a lithium secondary battery comprising an anode, a cathode and a non-aqueous electrolyte, wherein the anode includes an aqueous binder, and the non-aqueous electrolyte contains (a) a cyclic anhydride or a derivative thereof; and (b) any one anion receptor selected from the group consisting of a borane compound, a borate compound and mixtures thereof. According to US 8 691 448 B2, a stable SEI film is formed on the anode, and the life characteristics of the battery are improved by controlling the LiF content in the SEI film.

US 2021/020 990 A1 relates to a non-aqueous electrolyte secondary battery comprising a positive electrode including a positive electrode active material; a negative electrode; and a non-aqueous electrolyte, wherein the positive electrode active material has a composite oxide containing Ni and Li, the proportion of Ni being at least 33 mol % with respect to the total number of moles of metal elements other than Li, and the non-aqueous electrolyte contains a non-aqueous solvent containing a fluorine-containing cyclic carbonate; an isocyanurate derivative, such as triallyl isocyanurate; and a cyclic carboxylic anhydride, such as a succinic anhydride.

### [Disclosure]

### [Technical Problem]

Accordingly, in the present invention, it was confirmed that the above problems can be solved and thus the performance of the lithium-sulfur secondary battery can be improved, by incorporating a cyclic anhydride compound as an additive into an electrolyte solution for a lithium-sulfur secondary battery containing a lithium salt and a non-aqueous solvent, in order to prevent decomposition of the electrolyte solution for the lithium-sulfur secondary battery and improve lifetime characteristics, thereby completing the present invention.

Therefore, it is object of the present invention to provide an electrolyte solution for a lithium-sulfur secondary battery that can prevent decomposition of the electrolyte solution and improve lifetime characteristics. It is another object of the present invention to provide a lithium-sulfur secondary battery comprising the electrolyte solution, which has improved performance of the battery.

### [Technical Solution]

In order to achieve the above objects, the present invention provides an electrolyte solution for a lithium-sulfur secondary battery containing a lithium salt and a non-aqueous solvent and further containing a cyclic anhydride compound as an additive,
wherein the lithium salt is at least one selected from the group consisting of LiCl, LiBr, LiI, LiClO₄, LiBF₄, LiB₁₀Cl₁₀, LiB(Ph)₄, LiC₄BO₈, LiPF₆, LiCF₃SO₃, LiCF₃CO₂, LiAsF₆, LiSbF₆, LiAlCl₄, LiSO₃CH₃, LiSO₃CF₃, LiSCN, LiC(CF₃SO₂)₃, LiN(CF₃SO₂)₂, LiN(C₂F₅SO₂)₂, LiN(SO₂F)₂ and lithium lower aliphatic carboxylate,
wherein the non-aqueous solvent comprises a linear ether and a cyclic ether, the linear ether being selected from the group consisting of dimethyl ether, diethyl ether, dipropyl ether, dibutyl ether, diisobutyl ether, ethylmethyl ether, ethylpropyl ether, ethyl tert-butyl ether, dimethoxymethane, trimethoxymethane, dimethoxyethane, diethoxyethane, dimethoxypropane, diethylene glycol dimethyl ether, diethylene glycol diethyl ether, triethylene glycol dimethyl ether, tetra-ethylene glycol dimethyl ether, ethylene glycol divinylether, diethylene glycol divinylether, triethylene glycol divinylether, dipropylene glycol dimethyl ether, butylene glycol ether, diethylene glycol ethylmethyl ether, diethylene glycol isopropylmethyl ether, diethylene glycol butylmethyl ether, diethylene glycol tert-butylethyl ether, and ethylene glycol ethylmethyl ether; and the cyclic ether being selected from the group consisting of dioxolane, methyldioxolane, dimethyldioxolane, vinyldioxolane, methoxydioxolane, ethylmethyldioxolane, oxane, dioxane, trioxane, tetrahydrofuran, methyl tetrahydrofuran, dimethyl tetrahydrofuran, dimethoxy tetrahydrofuran, ethoxy tetrahydrofuran, dihydropyran, tetrahydropyran, furan and 2-methylfuran; and
wherein the cyclic anhydride compound is represented by any one of Chemical Formula 1 to Chemical Formula 3: 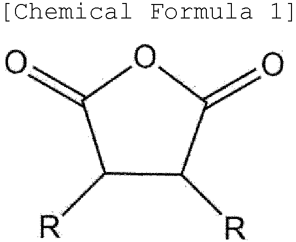 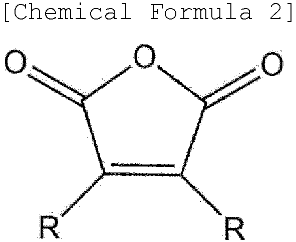 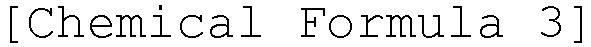 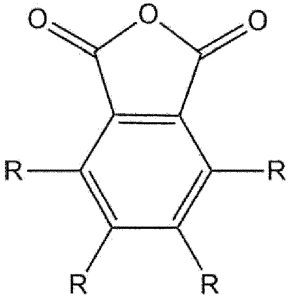
in Chemical Formula 1 to Chemical Formula 3,
each of R is the same or different, and is hydrogen, a substituted or unsubstituted alkyl group, a substituted or unsubstituted cycloalkyl group, a substituted or unsubstituted aryl group, or a substituted or unsubstituted heteroaryl group.

In addition, the present invention provides an electrolyte solution for a lithium-sulfur secondary battery containing a lithium salt and a non-aqueous solvent and further containing a cyclic anhydride compound as an additive, wherein the cyclic anhydride compound is represented by any one of Chemical Formula 1-1 to Chemical Formula 1-3:

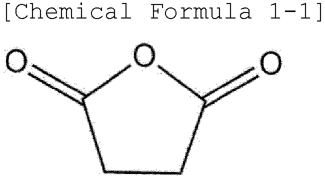

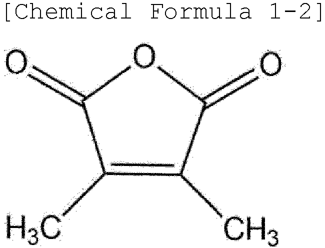

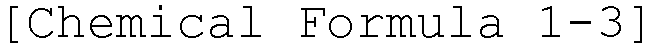

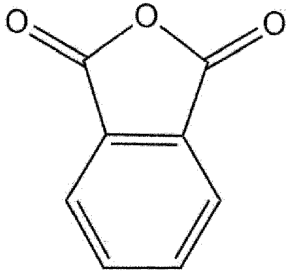

In addition, the present invention provides an electrolyte solution for a lithium-sulfur secondary battery containing a lithium salt and a non-aqueous solvent and further containing a cyclic anhydride compound as an additive, wherein the content of the cyclic anhydride compound is 0.1 % by weight to 10 % by weight based on the total weight of the electrolyte solution.

In addition, the present invention provides an electrolyte solution for a lithium-sulfur secondary battery containing a lithium salt and a non-aqueous solvent and further containing a cyclic anhydride compound as an additive, which further contains a nitric acid-based compound.

In addition, the present invention provides an electrolyte solution for a lithium-sulfur secondary battery containing a lithium salt and a non-aqueous solvent and further containing a cyclic anhydride compound as an additive, which further contains a nitric acid-based compound, wherein the nitric acid-based compound is at least one selected from the group consisting of lithium nitrate, potassium nitrate, cesium nitrate, barium nitrate, ammonium nitrate, methyl nitrate, dialkyl imidazolium nitrate, guanidine nitrate, imidazolium nitrate, and pyridinium nitrate.

In addition, the present invention provides a lithium-sulfur secondary battery comprising the above-described electrolyte solution, a positive electrode, a negative electrode, and a separator.

### [Advantageous Effects]

The electrolyte solution for the lithium-sulfur secondary battery according to the present invention contains a lithium salt and a non-aqueous solvent, and additionally contains a cyclic anhydride compound as an additive, and thus has the effect of preventing the decomposition of the electrolyte solution during the operation of the lithium-sulfur secondary battery and improving the lifetime characteristics.

### [Description of Drawings]

FIG. 1 is a graph showing the lifetime characteristics of lithium-sulfur secondary batteries according to Examples 1 to 3 of the present invention and Comparative Examples 1 and 2.
FIG. 2 is a graph showing the lifetime characteristics of lithium-sulfur secondary batteries according to Example 1 of the present invention and Comparative Example 3.
FIG. 3 is a graph showing the lifetime characteristics of lithium-sulfur secondary batteries according to Examples 1, 4 and 5 of the present invention and Comparative Example 4.

### [Best Mode]

The embodiments provided according to the present invention can all be achieved by the following description.

The present invention provides an electrolyte solution for a lithium-sulfur secondary battery containing a lithium salt and a non-aqueous solvent, and further containing a cyclic anhydride compound as an additive,
wherein the lithium salt is at least one selected from the group consisting of LiCl, LiBr, LiI, LiClO₄, LiBF₄, LiB₁₀Cl₁₀, LiB(Ph)₄, LiC₄BO₈, LiPF₆, LiCF₃SO₃, LiCF₃CO₂, LiAsF₆, LiSbF₆, LiAlCl₄, LiSO₃CH₃, LiSO₃CF₃, LiSCN, LiC(CF₃SO₂)₃, LiN(CF₃SO₂)₂, LiN(C₂F₅SO₂)₂, LiN(SO₂F)₂ and lithium lower aliphatic carboxylate,
wherein the non-aqueous solvent comprises a linear ether and a cyclic ether, the linear ether being selected from the group consisting of dimethyl ether, diethyl ether, dipropyl ether, dibutyl ether, diisobutyl ether, ethylmethyl ether, ethylpropyl ether, ethyl tert-butyl ether, dimethoxymethane, trimethoxymethane, dimethoxyethane, diethoxyethane, dimethoxypropane, diethylene glycol dimethyl ether, diethylene glycol diethyl ether, triethylene glycol dimethyl ether, tetra-ethylene glycol dimethyl ether, ethylene glycol divinylether, diethylene glycol divinylether, triethylene glycol divinylether, dipropylene glycol dimethyl ether, butylene glycol ether, diethylene glycol ethylmethyl ether, diethylene glycol isopropylmethyl ether, diethylene glycol butylmethyl ether, diethylene glycol tert-butylethyl ether, and ethylene glycol ethylmethyl ether; and the cyclic ether being selected from the group consisting of dioxolane, methyldioxolane, dimethyldioxolane, vinyldioxolane, methoxydioxolane, ethylmethyldioxolane, oxane, dioxane, trioxane, tetrahydrofuran, methyl tetrahydrofuran, dimethyl tetrahydrofuran, dimethoxy tetrahydrofuran, ethoxy tetrahydrofuran, dihydropyran, tetrahydropyran, furan and 2-methylfuran; and
wherein the cyclic anhydride compound is represented by any one of Chemical Formula 1 to Chemical Formula 3: 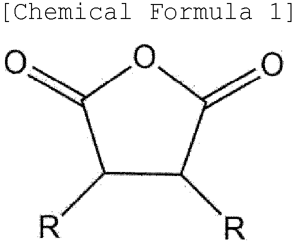 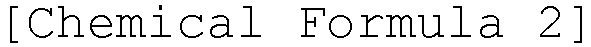 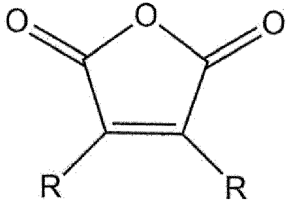 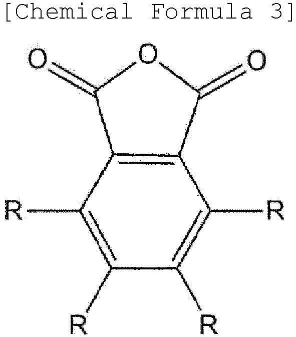
in Chemical Formula 1 to Chemical Formula 3,
each of R is the same or different, and is hydrogen, a substituted or unsubstituted alkyl group, a substituted or unsubstituted cycloalkyl group, a substituted or unsubstituted aryl group, or a substituted or unsubstituted heteroaryl group.

In addition, the cyclic anhydride compound according to the present invention are a compound represented by any one of Chemical Formula 1 to Chemical Formula 3 below. 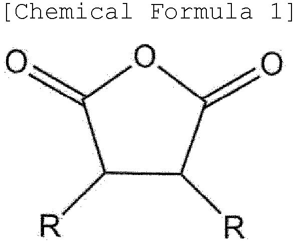 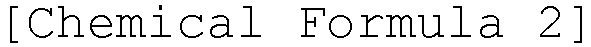 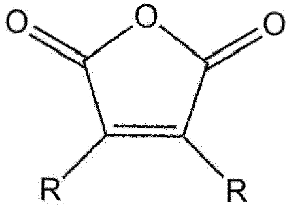 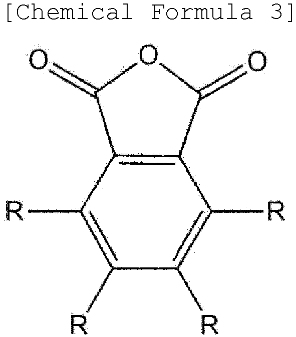 in Chemical Formula 1 to Chemical Formula 3 above,
each of R is the same or different, and is hydrogen, a substituted or unsubstituted alkyl group, a substituted or unsubstituted cycloalkyl group, a substituted or unsubstituted aryl group, or a substituted or unsubstituted heteroaryl group.

In addition, the cyclic anhydride compound may be a compound represented by any one of Chemical Formula 1-1 to Chemical Formula 1-3 below.

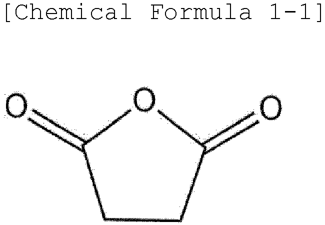

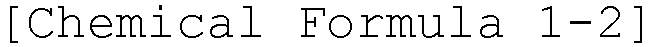

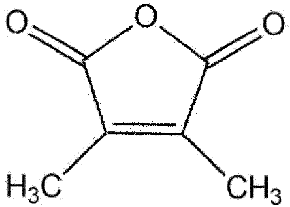

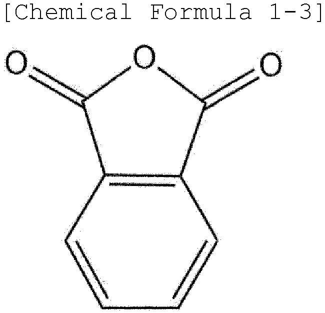

The content of the cyclic anhydride compound according to the present invention may be 0.1 % by weight to 10 % by weight, preferably 0.1 % by weight to 5 % by weight, more preferably 0.1 % by weight to 3 % by weight, based on the total weight of the electrolyte solution. If the content of the cyclic anhydride compound is less than the above range, the effect of forming a film (Solid Electrolyte Interphase, SEI) on the electrode surface is insignificant, so that the effect of improving the lifetime characteristics is insufficient. If the content of the cyclic anhydride compound exceeds the above range, there may be a problem that resistance due to excess additives is increased. Therefore, it is preferable that the content of the cyclic anhydride compound preferably satisfies the above range.

Meanwhile, the electrolyte solution for the lithium-sulfur secondary battery of the present invention includes a lithium salt and a non-aqueous solvent, and the lithium salt may be a material, which is easily soluble in non-aqueous organic solvent, and is selected from the group consisting of LiCl, LiBr, LiI, LiClO₄, LiBF₄, LiB₁₀Cl₁₀, LiB(Ph)₄, LiC₄BO₈, LiPF₆, LiCF₃SO₃, LiCF₃CO₂, LiAsF₆, LiSbF₆, LiAlCl₄, LiSO₃CH₃, LiSO₃CF₃, LiSCN, LiC(CF₃SO₂)₃, LiN(CF₃SO₂)₂, LiN(C₂F₅SO₂)₂, LiN(SO₂F)₂, and lithium lower aliphatic carboxylate, and preferably LiN(CF₃SO₂)₂ may be used.

The concentration of the lithium salt may be 0.2 to 2 M, specifically 0.5 to 1.8 M, and more specifically 0.6 to 1.7 M, depending on various factors such as the exact composition of the electrolyte mixture, the solubility of the salt, the conductivity of the dissolved salt, the charging and discharging conditions of the battery, the operating temperature and other factors known in the lithium battery field. If the concentration of the lithium salt is less than the above range, the conductivity of the electrolyte may be lowered and thus the performance of the electrolyte may be deteriorated. If the concentration of the lithium salt exceeds the above range, the viscosity of the electrolyte may increase and thus the mobility of the lithium ion (Li⁺) may be reduced.

The non-aqueous solvent according to the present invention includes an ether-based solvent and a non-solvent, and the ether-based solvent comprises a linear ether and a cyclic ether.

The linear ether is selected from the group consisting of dimethyl ether, diethyl ether, dipropyl ether, dibutyl ether, diisobutyl ether, ethylmethyl ether, ethylpropyl ether, ethyl tert-butyl ether, dimethoxymethane, trimethoxymethane, dimethoxyethane, diethoxyethane, dimethoxypropane, diethylene glycol dimethyl ether, diethylene glycol diethyl ether, triethylene glycol dimethyl ether, tetra-ethylene glycol dimethyl ether, ethylene glycol divinylether, diethylene glycol divinylether, triethylene glycol divinylether, dipropylene glycol dimethyl ether, butylene glycol ether, diethylene glycol ethylmethyl ether, diethylene glycol isopropylmethyl ether, diethylene glycol butylmethyl ether, diethylene glycol tert-butylethyl ether, and ethylene glycol ethylmethyl ether, and preferably dimethoxyethane may be used.

The cyclic ether is selected from the group consisting of dioxolane, methyldioxolane, dimethyldioxolane, vinyldioxolane, methoxydioxolane, ethylmethyldioxolane, oxane, dioxane, trioxane, tetrahydrofuran, methyl tetrahydrofuran, dimethyl tetrahydrofuran, dimethoxy tetrahydrofuran, ethoxy tetrahydrofuran, dihydropyran, tetra-hydropyran, furan and 2-methylfuran, and preferably 2-methylfuran may be used.

The volume ratio of the linear ether and the cyclic ether may be 9:1 to 1:9, preferably 8:2 to 2:8, and more preferably 7:3 to 3:7.

When the volume ratio of the linear ether and the cyclic ether is out of the above range, the effect of improving the lifetime characteristics of the battery is insufficient and thus the desired effect cannot be obtained. Therefore, it is preferable that the volume ratio of the linear ether and the cyclic ether satisfies the above range.

The electrolyte solution for the lithium-sulfur secondary battery of the present invention may further comprise nitric acid or nitrous acid-based compounds as an additive. The nitric acid or nitrous acid-based compounds have an effect of forming a stable coating on the lithium electrode and improving the charging/discharging efficiency. The nitric acid or nitrous acid-based compounds are not particularly limited in the present invention, but may be at least one selected from the group consisting of inorganic nitric acid or nitrous acid compounds such as lithium nitrate (LiNO₃), potassium nitrate (KNO₃), cesium nitrate (CsNO₃), barium nitrate (Ba(NO₃)₂), ammonium nitrate (NH₄NO₃), lithium nitrite (LiNO₂), potassium nitrite (KNO₂), cesium nitrite (CsNO₂), ammonium nitrite (NH₄NO₂); organic nitric acid or nitrous acid compounds such as methyl nitrate, dialkyl imidazolium nitrate, guanidine nitrate, imidazolium nitrate, pyridinium nitrate, ethyl nitrite, propyl nitrite, butyl nitrite, pentyl nitrite, octyl nitrite; organic nitro compounds such as nitromethane, nitropropane, nitrobutane, nitrobenzene, dinitrobenzene, nitropyridine, dinitropyridine, nitrotoluene, dinitrotoluene, and the combinations thereof. Preferably, lithium nitrate (LiNO₃) may be used.

In addition, the electrolyte solution for the lithium-sulfur secondary battery of the present invention may further comprise other additives for the purpose of improving chargeing/discharging characteristics, flame retardancy, and the like. Examples of the additives may comprise pyridine, triethylphosphite, triethanolamine, cyclic ether, ethylene diamine, n-glyme, hexaphosphoric triamide, nitrobenzene derivatives, sulfur, quinoneimine dyes, N-substituted oxazolidinone, N,N-substituted imidazolidine, ethylene glycol dialkyl ether, ammonium salt, pyrrole, 2-methoxy ethanol, aluminum trichloride, fluoroethylene carbonate (FEC), propene sultone (PRS), vinylene carbonate (VC) and the like.

The method for preparing the electrolyte solution for the lithium-sulfur secondary battery of the present invention is not particularly limited in the present invention, and may be prepared by a conventional method known in the art.

The present invention provides a lithium-sulfur secondary battery comprising the above-described electrolyte solution for the lithium-sulfur secondary battery.

The lithium-sulfur secondary battery may comprise a positive electrode, a negative electrode, a separator interposed between the positive electrode and the negative electrode, and an electrolyte solution, and may comprise the electrolyte solution for the lithium-sulfur secondary battery according to the present invention as an electrolyte solution.

The positive electrode may comprise a positive electrode current collector and a positive electrode active material layer applied to one or both surfaces of the positive electrode current collector.

The positive electrode current collector is for supporting the positive electrode active material layer, and is not particularly limited as long as it has high electrical conductivity without causing chemical changes in the battery. For example, copper, stainless steel, aluminum, nickel, titanium, palladium, sintered carbon; copper or stainless steel whose surface is treated with carbon, nickel, silver or the like; aluminum-cadmium alloy or the like may be used.

The positive electrode current collector can have minute irregularities formed on its surface to enhance the bonding force with the positive electrode active material layer, and may be formed in various forms such as film, sheet, foil, mesh, net, porous body, foam, nonwoven fabric or the like.

The positive electrode active material layer may comprise a positive electrode active material and optionally an electrically conductive material and a binder.

The positive electrode active material may be at least one selected from the group consisting of elemental sulfur (S₈); Li₂Sₙ(n≥1), organic sulfur compound or carbon-sulfur polymer ((C₂Sₓ)n: x=2.5 ~ 50, n≥2). Preferably, the inorganic sulfur (S₈) can be used.

The positive electrode may further comprise at least one additive selected from a transition metal element, a Group 2 element, a Group 3 element, a sulfur compound of these elements, and an alloy of these elements and sulfur, in addition to the positive electrode active material.

The transition metal element may comprise Sc, Ti, V, Cr, Mn, Fe, Co, Ni, Cu, Zn, Y, Zr, Nb, Mo, Tc, Ru, Rh, Pd, Os, Ir, Pt, Au, Hg and the like, and the Group 2 element may comprise Al, Ga, In, Ti and the like, and the Group 3 element may comprise Ge, Sn, Pb, and the like.

The electrically conductive material is intended to improve electrical conductivity and is not particularly limited as long as it is an electronically conductive material that does not cause chemical change in the lithium secondary battery. Generally, carbon black, graphite, carbon fiber, carbon nanotube, metal powder, electrically conductive metal oxide, organic electrically-conductive material and the like can be used. Products that are currently marketed as electrically conductive materials may comprise acetylene black series (products from Chevron Chemical Company or Gulf Oil Company), Ketjen Black EC series (products from Armak Company), Vulcan XC-72(a product from Cabot Company) and Super P (a product from MMM company). For example, acetylene black, carbon black, graphite, etc. may be used.

In addition, the positive electrode active material layer may further comprise a binder having a function of holding the positive electrode active material on the positive electrode current collector and connecting between active materials. As the binder, for example, various types of binders such as polyvinylidene fluoride-hexafluoropropylene (PVDF-co-HFP), polyvinylidene fluoride (PVDF), polyacrylonitrile, polymethyl methacrylate, styrenebutadiene rubber (SBR), carboxyl methyl cellulose (CMC) and the like can be used.

As the positive electrode, a positive electrode having a high sulfur loading may be used. The loading amount of sulfur may be 3.0 mAh/cm² or more, preferably 4.0 mAh/cm² or more, and more preferably 5.0 mAh/cm² or more.

The negative electrode may comprise a negative electrode current collector and a negative electrode active material positioned on the negative electrode current collector. Also, the negative electrode may be a lithium metal plate.

The negative electrode current collector is for supporting the negative electrode active material and is not particularly limited as long as it is electrochemically stable in the voltage range of the lithium secondary battery while having excellent conductivity, and for example, copper, stainless steel, aluminum, nickel, titanium, palladium, sintered carbon, or copper or stainless steel whose surface is treated with carbon, nickel, silver or the like, or aluminum-cadmium alloy or the like may be used.

The negative electrode current collector can enhance the bonding force with the negative electrode active material by having fine irregularities on its surface, and may be formed in various forms such as film, sheet, foil, mesh, net, porous body, foam, or nonwoven fabric. The negative electrode active material may comprise a material capable of reversibly intercalating or de-intercalating lithium (Li⁺), a material capable of reacting with lithium ion to reversibly form lithium containing compounds, or lithium metal or lithium alloy. The material capable of reversibly intercalating or de-intercalating lithium ion (Li⁺) can be, for example, crystalline carbon, amorphous carbon, or a mixture thereof. The material capable of reacting with lithium ion (Li⁺) to reversibly form lithium containing compounds may be, for example, tin oxide, titanium nitrate, or silicon . The lithium alloy may be, for example, an alloy of lithium (Li) and a metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn). Preferably, the negative electrode active material may be lithium metal, and specifically may be in the form of a lithium metal thin film or lithium metal powder.

The method of forming the negative electrode active material is not particularly limited, and a method of forming a layer or film commonly used in the art may be used. For example, a method such as compression, coating, or deposition may be used. In addition, a case, in which a thin film of metallic lithium is formed on a metal plate by initial charging after assembling a battery without a lithium thin film in the current collector, is also comprised in the negative electrode of the present invention.

The separator is a physical separator having a function of physically separating the positive electrode and the negative electrode in the lithium-sulfur secondary battery, and can be used without particular limitation as long as it is generally used as a separator in the lithium-sulfur secondary battery. In particular, the separator is preferable as long as it has a low resistance to ion migration in the electrolyte and an excellent impregnating ability for the electrolyte solution.

The separator may be consisted of a porous substrate. Any porous substrate can be used as long as it is a porous substrate commonly used in electrochemical devices, and for example, a polyolefin-based porous membrane or nonwoven fabric may be used, but it is not particularly limited thereto.

Examples of the polyolefin-based porous membrane may be membranes formed of any polymer alone selected from polyethylene such as high density polyethylene, linear low density polyethylene, low density polyethylene, and ultrahigh molecular weight polyethylene, and polyolefin-based polymers such as polypropylene, polybutylene, and polypentene, or formed of a polymer mixture thereof.

In addition to the above-mentioned polyolefin-based nonwoven fabric, the nonwoven fabric may be a nonwoven fabric formed of, for example, any polymer alone selected from polyethylene terephthalate, polybutylene terephthalate, polyester, polyacetal, polyamide, polycarbonate, polyimide, polyetheretherketone, polyethersulfone, polyphenylene oxide, polyphenylene sulfide, polyethylene naphthalene and the like, or formed of a polymer mixture thereof. The structure of the nonwoven fabric may be a spunbonded nonwoven fabric or a melt blown nonwoven fabric composed of long fibers.

The thickness of the porous substrate is not particularly limited, but may be 1 to 100 µm, preferably 5 to 50 µm.

The size and porosity of the pores present in the porous substrate are also not particularly limited, but may be 0.001 to 50 *µ*m and 10 to 95%, respectively.

The electrolyte solution comprises lithium ions, and is used for causing an electrochemical oxidation or reduction reaction between a positive electrode and a negative electrode through these, which is as described above.

The injection of the electrolyte solution can be performed at an appropriate stage of the manufacturing process of the electrochemical device depending on the manufacturing process and required properties of the final product. That is, it can be applied before assembling the electrochemical device or in the final stage of assembling the electrochemical device.

In the case of the lithium-sulfur secondary battery according to the present invention, it is possible to perform laminating or stacking and folding processes of the separator and the electrode, in addition to the winding process which is a general process.

The shape of the lithium-sulfur secondary battery is not particularly limited, and may be of various shapes such as a cylindrical shape, a laminate shape, or a coin shape.

Hereinafter, preferred examples are presented to help the understanding of the present invention, but the following examples are provided to make the present invention easier to understand, and the present invention is not limited thereto.

### Example

### Preparation of electrolyte solution for lithium-sulfur secondary battery

### Preparation Example 1

In a non-aqueous solvent obtained by mixing 1,3-dioxolane (DOL):1,2-dimethoxyethane (DME) in a volume ratio of 1:1, lithium bis(trifluoromethyl sulfonyl)imide (LiTFSI) was dissolved so as to be a concentration of 1.0M (mol/L), and lithium nitrate (LiNO₃) was added in an amount of 1.0 % by weight based on the total weight of the electrolyte solution, and then the cyclic anhydride compound represented by the following Chemical Formula 1-1 was added in an amount of 1 % by weight based on the total weight of the electrolyte solution to prepare an electrolyte solution for a lithium-sulfur secondary battery.

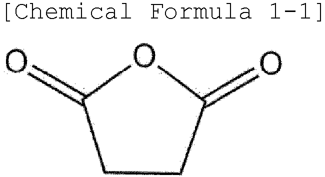

### Preparation Example 2

An electrolyte solution for a lithium-sulfur secondary battery was prepared in the same manner as in Preparation Example 1, except that the cyclic anhydride compound represented by Chemical Formula 1-1 was added in an amount of 0.1 % by weight.

### Preparation Example 3

An electrolyte solution for a lithium-sulfur secondary battery was prepared in the same manner as in Preparation Example 1, except that the cyclic anhydride compound represented by Chemical Formula 1-1 was added in an amount of 3.0 % by weight.

### Preparation Example 4

An electrolyte solution for a lithium-sulfur secondary battery was prepared in the same manner as in Preparation Example 1, except that the cyclic anhydride compound represented by Chemical Formula 1-1 is replaced with the cyclic anhydride compound represented by Chemical Formula 1-2 below.

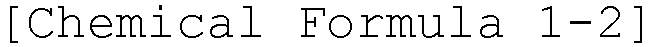

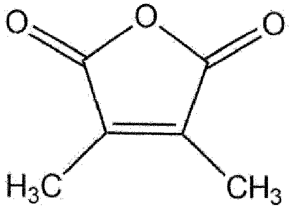

### Preparation Example 5

An electrolyte solution for a lithium-sulfur secondary battery was prepared in the same manner as in Preparation Example 1, except that the cyclic anhydride compound represented by Chemical Formula 1-1 is replaced with the cyclic anhydride compound represented by Chemical Formula 1-3 below.

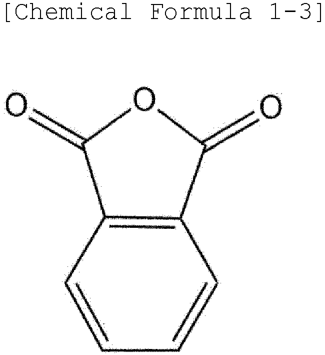

### Comparative Preparation Example 1

An electrolyte solution for a lithium-sulfur secondary battery was prepared in the same manner as in Preparation Example 1, except that the cyclic anhydride compound represented by Chemical Formula 1-1 is not added.

### Comparative Preparation Example 2

An electrolyte solution for a lithium-sulfur secondary battery was prepared in the same manner as in Preparation Example 1, except that the cyclic anhydride compound represented by Chemical Formula 1-1 is added in an amount of 10 % by weight.

### Comparative Preparation Example 3

An electrolyte solution for a lithium-sulfur secondary battery was prepared in the same manner as in Preparation Example 1, except that the non-aqueous solvent obtained by mixing the 1,3-dioxolane (DOL):1,2-dimethoxyethane (DME) in a volume ratio of 1:1 is replaced with a non-aqueous solvent obtained by mixing propylene carbonate (PC):dimethyl carbonate (DMC):ethyl methyl carbonate (EMC) in a volume ratio of 4:3:3.

### Comparative Preparation Example 4

An electrolyte solution for a lithium-sulfur secondary battery was prepared in the same manner as in Preparation Example 1, except that the cyclic anhydride compound represented by Chemical Formula 1-1 is replaced with the following Comparative compound A.

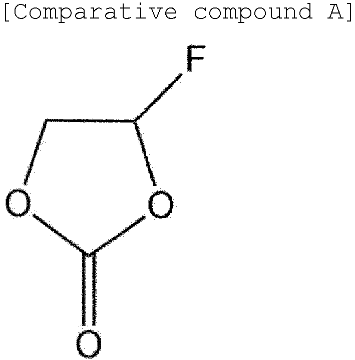

The contents of the non-aqueous solvent and the cyclic anhydride compound in the electrolyte solutions for the lithium-sulfur secondary battery of Preparation Examples 1 to 5 and Comparative Preparation Examples 1 to 4 are as shown in Table 1 below.

**Table 1:**

| | Non-aqueous solvent (volume ratio) | Cyclic anhydride compound | Content of cyclic anhydride compound (% by weight) |
|---|---|---|---|
| Preparation Example 1 | DOL:DME (1:1) | Compound of Chemical Formula 1 | 1 |
| Preparation Example 2 | DOL: DME (1:1) | Compound of Chemical Formula 1 | 0.1 |
| Preparation Example 3 | DOL:DME (1:1) | Compound of Chemical Formula 1 | 3 |
| Preparation Example 4 | DOL:DME (1:1) | Compound of Chemical Formula 2 | 1 |
| Preparation Example 5 | DOL:DME (1:1) | Compound of Chemical Formula 3 | 1 |
| Comparative Preparation Example 1 | DOL:DME (1:1) | - | - |
| Comparative Preparation Example 2 | DOL:DME (1:1) | Compound of Chemical Formula 1 | 10 |
| Comparative Preparation Example 3 | PC:DMC:EMC (4:3:3) | Compound of Chemical Formula 1 | 1 |
| Comparative Preparation Example 4 | DOL:DME (1:1) | Comparative compound A | 1 |

### Experimental example

### Evaluation of lifetime characteristics of lithium-sulfur secondary battery

Sulfur was mixed with an electrically conductive material and a binder in acetonitrile using a ball mill to prepare a slurry of the positive electrode active material layer. At this time, carbon black was used as the electrically conductive material, and a binder of a mixed type of SBR and CMC was used as the binder, and the mixing ratio was set to 72:24:4 of sulfur:electrically conductive material:binder in weight ratio. The slurry of the positive electrode active material layer was applied to an aluminum current collector at a loading amount of 5.0 mAh/cm², and then dried to prepare a positive electrode having a porosity of 68%. In addition, lithium metal having a thickness of 45 *µ*m was used as a negative electrode.

After positioning the positive electrode prepared by the above method and the negative electrode to face each other, a polyethylene separator having a thickness of 20 *µ*m and a porosity of 45% was interposed between the positive electrode and the negative electrode.

After that, the electrolyte solutions for the lithium-sulfur secondary battery according to Preparation Examples 1 to 5 and Comparative Preparation Examples 1 to 4 were injected into the case to manufacture lithium-sulfur secondary batteries of Examples 1 to 5 and Comparative Examples 1 to 4.

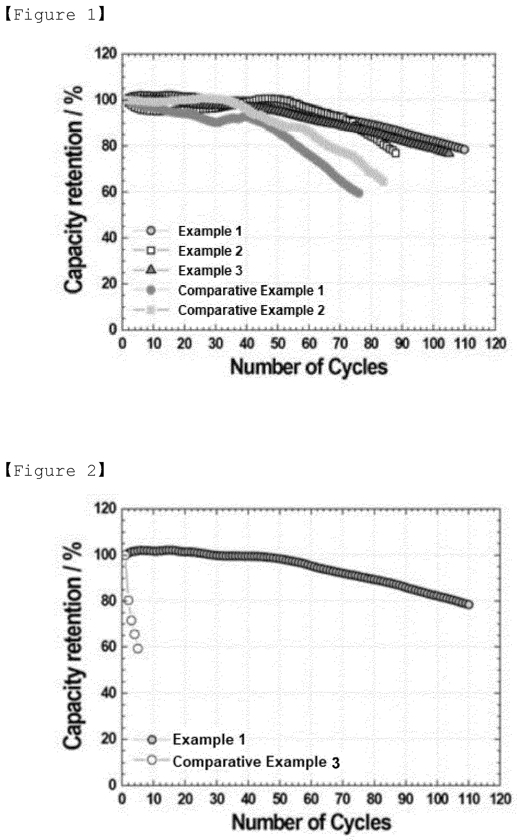

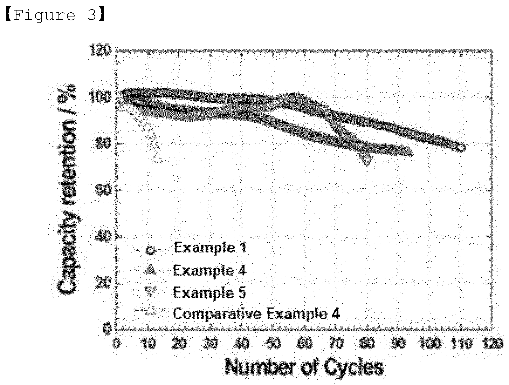

The lithium-sulfur secondary batteries prepared by the above method were repeatedly discharged and charged 2.5 times at a current density of 0.1 C, and then discharged and charged three times at a current density of 0.2 C, and thereafter, while conducting 110 cycles at a current density of 0.5 C, the lifetime cycle of lithium-sulfur secondary batteries when the capacity retention rate was 80% was measured to confirm the lifetime characteristics of the batteries. The results obtained at this time are shown in Table 2 and FIGs. 1-3.

**Table 2:**

| | Lifetime cycle (capacity retention rate 80%) |
|---|---|
| Example 1 | 106 |
| Example 2 | 84 |
| Example 3 | 96 |
| Example 4 | 72 |
| Example 5 | 76 |
| Comparative Example 1 | 56 |
| Comparative Example 2 | 66 |
| Comparative Example 3 | 2 |
| Comparative Example 4 | 11 |

As shown in Table 2 above, it was confirmed that in the case of lithium-sulfur secondary batteries to which the electrolyte solutions for the lithium-sulfur secondary battery according to Examples 1 to 5 are applied, the lifetime characteristics of the batteries were excellent, as compared to the lithium-sulfur secondary batteries to which the electrolyte solutions for the lithium-sulfur secondary battery according to Comparative Examples 1 to 4 were applied.

Specifically, it can be confirmed that by using the electrolyte solutions for the lithium-sulfur secondary battery according to Examples 1 to 5 having the content of the cyclic anhydride compound represented by any one of Chemical Formulas 1 to 3 in the non-aqueous solvent of 0.1 % by weight to 3 % by weight, the lithium-sulfur secondary batteries according to the present invention form a stable SEI (Solid-Electrolyte Interphase) film on the lithium negative electrode and thus suppress the reaction between lithium and polysulfide and the decomposition of the electrolyte solution, thereby exhibiting an effect of improving the lifetime characteristics of the battery.

On the other hand, if the cyclic anhydride compound was not contained (Comparative Example 1) or an excessive amount was contained (Comparative Example 2), no improvement in lifetime characteristics was observed. In addition, it was confirmed that if a carbonate-based solvent is used as a non-aqueous solvent (Comparative Example 3) and if a carbonate-based additive is used as an additive (Comparative Example 4), the lifetime characteristics are remarkably deteriorated.

When considering these points, if the electrolyte solution for the lithium-sulfur secondary battery containing the cyclic anhydride compound according to the present invention is used, the lifetime characteristics of the battery are improved, as compared to that of a conventional lithium-sulfur secondary battery.

## Claims

1. An electrolyte solution for a lithium-sulfur secondary battery comprising a lithium salt, a non-aqueous solvent and a cyclic anhydride compound,
wherein the lithium salt is at least one selected from the group consisting of LiCl, LiBr, LiI, LiClO₄, LiBF₄, LiB₁₀Cl₁₀, LiB(Ph)₄, LiC₄BO₈, LiPF₆, LiCF₃SO₃, LiCF₃CO₂, LiAsF₆, LiSbF₆, LiAlCl₄, LiSO₃CH₃, LiSO₃CF₃, LiSCN, LiC(CF₃SO₂)₃, LiN(CF₃SO₂)₂, LiN(C₂F₅SO₂)₂, LiN(SO₂F)₂ and lithium lower aliphatic carboxylate,
wherein the non-aqueous solvent comprises a linear ether and a cyclic ether, the linear ether being selected from the group consisting of dimethyl ether, diethyl ether, dipropyl ether, dibutyl ether, diisobutyl ether, ethylmethyl ether, ethylpropyl ether, ethyl tert-butyl ether, dimethoxymethane, trimethoxymethane, dimethoxyethane, diethoxyethane, dimethoxypropane, diethylene glycol dimethyl ether, diethylene glycol diethyl ether, triethylene glycol dimethyl ether, tetra-ethylene glycol dimethyl ether, ethylene glycol divinylether, diethylene glycol divinylether, triethylene glycol divinylether, dipropylene glycol dimethyl ether, butylene glycol ether, diethylene glycol ethylmethyl ether, diethylene glycol isopropylmethyl ether, diethylene glycol butylmethyl ether, diethylene glycol tert-butylethyl ether, and ethylene glycol ethylmethyl ether; and the cyclic ether being selected from the group consisting of dioxolane, methyldioxolane, dimethyldioxolane, vinyldioxolane, methoxydioxolane, ethylmethyldioxolane, oxane, dioxane, trioxane, tetrahydrofuran, methyl tetrahydrofuran, dimethyl tetrahydrofuran, dimethoxy tetrahydrofuran, ethoxy tetrahydrofuran, dihydropyran, tetrahydropyran, furan and 2-methylfuran; and
wherein the cyclic anhydride compound is represented by any one of Chemical Formula 1 to Chemical Formula 3: 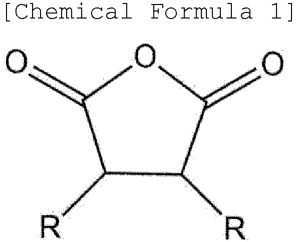 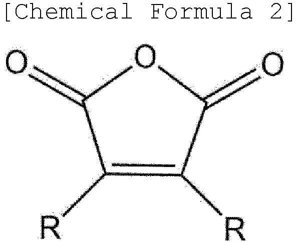 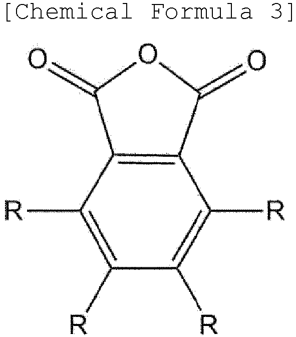
in Chemical Formula 1 to Chemical Formula 3,
each of R is the same or different, and is hydrogen, a substituted or unsubstituted alkyl group, a substituted or unsubstituted cycloalkyl group, a substituted or unsubstituted aryl group, or a substituted or unsubstituted heteroaryl group.

2. The electrolyte solution for the lithium-sulfur secondary battery according to claim 1, wherein the cyclic anhydride compound is represented by any one of the following Chemical Formula 1-1 to Chemical Formula 1-3:

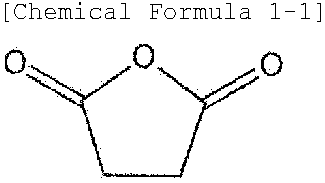

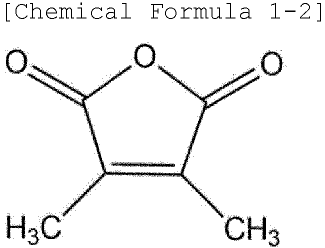

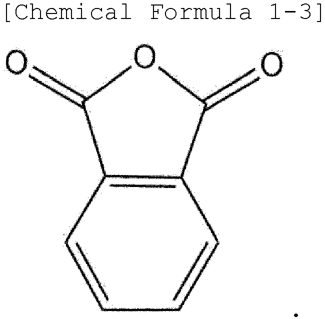

3. The electrolyte solution for the lithium-sulfur secondary battery according to claim 1, wherein the content of the cyclic anhydride compound is 0.1 % by weight to 10 % by weight relative to the total weight of the electrolyte solution.

4. The electrolyte solution for the lithium-sulfur secondary battery according to claim 1, further comprising a nitric acid-based compound.

5. The electrolyte solution for the lithium-sulfur secondary battery according to claim 4, wherein the nitric acid-based compound is at least one selected from the group consisting of lithium nitrate, potassium nitrate, cesium nitrate, barium nitrate, ammonium nitrate, methyl nitrate, dialkyl imidazolium nitrate, guanidine nitrate, imidazolium nitrate, and pyridinium nitrate.

6. A lithium-sulfur secondary battery comprising,
the electrolyte solution of any one of claims 1 to 5;
a positive electrode;
a negative electrode; and
a separator.

## Patentansprüche

1. Elektrolytlösung für eine Lithium-Schwefel-Sekundärbatterie, umfassend ein Lithiumsalz, ein nichtwässriges Lösungsmittel und eine cyclische Anhydridverbindung,
wobei das Lithiumsalz mindestens eines ist, ausgewählt aus der Gruppe bestehend aus LiCl, LiBr, LiI, LiClO₄, LiBF₄, LiB₁₀Cl₁₀, LiB(Ph)₄, LiC₄BO₈, LiPF₆, LiCF₃SO₃, LiCF₃CO₂, LiAsF₆, LiSbF₆, LiAlCl₄, LiSO₃CH₃, LiSO₃CF₃, LiSCN, LiC(CF₃SO₂)₃, LiN(CF₃SO₂)₂, LiN(C₂F₃SO₂)₂, LiN(SO₂F)₂ und niederem aliphatischem Lithiumcarboxylat,
wobei das nichtwässrige Lösungsmittel einen linearen Ether und einen cyclischen Ether umfasst, wobei der lineare Ether ausgewählt ist aus der Gruppe bestehend aus Dimethylether, Diethylether, Dipropylether, Dibutylether, Diisobutylether, Ethylmethylether, Ethylpropylether, Ethyl-tert-butylether, Dimethoxymethan, Trimethoxymethan, Dimethoxyethan, Diethoxyethan, Dimethoxypropan, Diethylenglykoldimethylether, Diethylenglykoldiethylether, Triethylenglykoldimethylether, Tetraethylenglykoldimethylether, Ethylenglykoldivinylether, Diethylenglykoldivinylether, Triethylenglykoldivinylether, Dipropylenglykoldimethylether, Butylenglykolether, Diethylenglykolethylmethylether, Diethylenglykolisopropylmethylether, Diethylenglykolbutylmethylether, Diethylenglykol-tert-butylethylether und Ethylenglykolethylmethylether; und wobei der cyclische Ether ausgewählt ist aus der Gruppe bestehend aus Dioxolan, Methyldioxolan, Dimethyldioxolan, Vinyldioxolan, Methoxydioxolan, Ethylmethyldioxolan, Oxan, Dioxan, Trioxan, Tetrahydrofuran, Methyltetrahydrofuran, Dimethyltetrahydrofuran, Dimethoxytetrahydrofuran, Ethoxytetrahydrofuran, Dihydropyran, Tetrahydropyran, Furan und 2-Methylfuran; und
wobei die cyclische Anhydridverbindung durch eine der Chemischen Formel 1 bis Chemischen Formel 3 dargestellt ist: 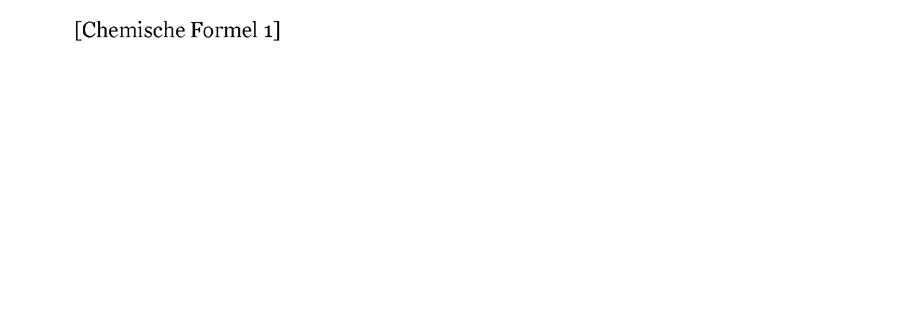 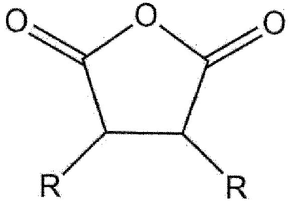 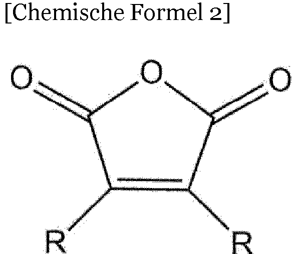 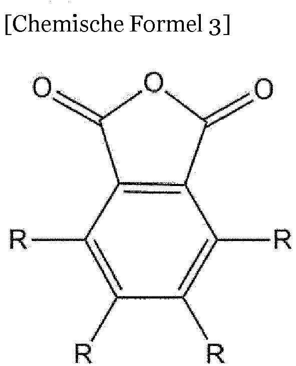
wobei in der Chemischen Formel 1 bis Chemischen Formel 3
jedes R gleich oder verschieden ist und Wasserstoff, eine substituierte oder unsubstituierte Alkylgruppe, eine substituierte oder unsubstituierte Cycloalkylgruppe, eine substituierte oder unsubstituierte Arylgruppe oder eine substituierte oder unsubstituierte Heteroarylgruppe ist.

2. Elektrolytlösung für die Lithium-Schwefel-Sekundärbatterie nach Anspruch 1, bei der die cyclische Anhydridverbindung durch eine der folgenden Chemischen Formel 1-1 bis Chemischen Formel 1-3 dargestellt ist:

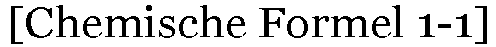

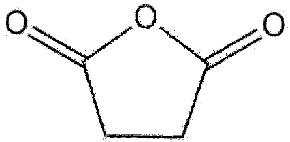

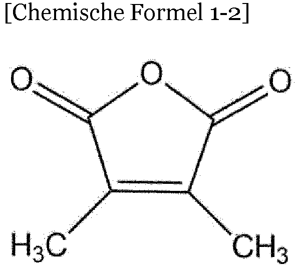

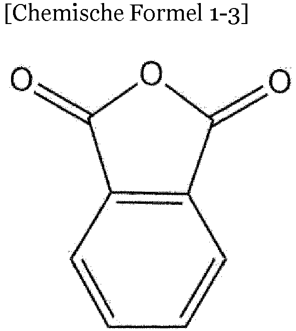

3. Elektrolytlösung für die Lithium-Schwefel-Sekundärbatterie nach Anspruch 1, bei der der Gehalt der cyclischen Anhydridverbindung 0,1 Gew.-% bis 10 Gew.-%, bezogen auf das Gesamtgewicht der Elektrolytlösung, beträgt.

4. Elektrolytlösung für die Lithium-Schwefel-Sekundärbatterie nach Anspruch 1, ferner umfassend eine Verbindung auf Basis von Salpetersäure.

5. Elektrolytlösung für die Lithium-Schwefel-Sekundärbatterie nach Anspruch 4, bei der die Verbindung auf Basis von Salpetersäure mindestens eine ist, die aus der Gruppe ausgewählt ist, die aus Lithiumnitrat, Kaliumnitrat, Cäsiumnitrat, Bariumnitrat, Ammoniumnitrat, Methylnitrat, Dialkylimidazoliumnitrat, Guanidinnitrat, Imidazoliumnitrat und Pyridiniumnitrat besteht.

6. Lithium-Schwefel-Sekundärbatterie, umfassend
die Elektrolytlösung nach einem der Ansprüche 1 bis 5;
eine positive Elektrode;
eine negative Elektrode; und
einen Separator.

## Revendications

1. Solution électrolytique pour une batterie rechargeable au lithium-soufre comprenant un sel de lithium, un solvant non aqueux et un composé anhydride cyclique,
dans laquelle le sel de lithium est un ou plusieurs éléments sélectionnés dans le groupe constitué de LiCl, LiBr, Lil, LiClO₄, LiBF₄, LiB₁₀Cl₁₀, LiB(Ph)₄, LiC₄BO₈, LiPF₆, LiCF₃SO₃, LiCF₃CO₂, LiAsF₆, LiSbF₆, LiAlCl₄, LiSO₃CH₃, LiSO₃CF₃, LiSCN, LiC(CF₃SO₂)₃, LiN(CF₃SO₂)₂, LiN(C₂F₅SO₂)₂, LiN(SO₂F)₂ et de carboxylate aliphatique inférieur de lithium,
dans laquelle le solvant non aqueux comprend un éther linéaire et un éther cyclique, l'éther linéaire étant sélectionné dans le groupe constitué d'éther diméthylique, éther diéthylique, éther dipropylique, éther dibutylique, éther diisobutylique, éther éthylméthylique, éther éthylpropylique, éther tert-butyléthylique, diméthoxyméthane, triméthoxyméthane, diméthoxyéthane, diéthoxyéthane, diméthoxypropane, éther diméthylique de diéthylène glycol, éther diéthylique de diéthylène glycol, éther diméthylique de triéthylène glycol, éther diméthylique de tétra-éthylène glycol, éther divinylique d'éthylène glycol, éther divinylique de diéthylène glycol, éther divinylique de triéthylène glycol, éther diméthylique de dipropylène glycol, éther de butylène glycol, éther éthylméthylique de diéthylène glycol, éther isopropylméthylique de diéthylène glycol, éther butylméthylique de diéthylène glycol, éther tert-butyléthylique de diéthylène glycol et éther éthylméthylique d'éthylène glycol ; et l'éther cyclique étant sélectionné dans le groupe constitué de dioxolane, méthyldioxolane, diméthyldioxolane, vinyldioxolane, méthoxydioxolane, éthylméthyldioxolane, oxane, dioxane, trioxane, tétrahydrofurane, méthyltétrahydrofurane, tétrahydrofurane diméthylique, tétrahydrofurane diméthoxy, tétrahydrofurane éthoxy, dihydropyrane, tétrahydropyrane, furane et 2-méthylfurane ; et
dans laquelle le composé anhydride cyclique est représenté par l'une quelconque des Formules chimiques 1 à 3 : 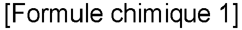 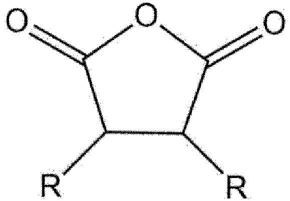 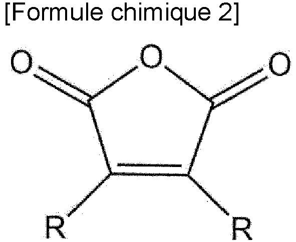 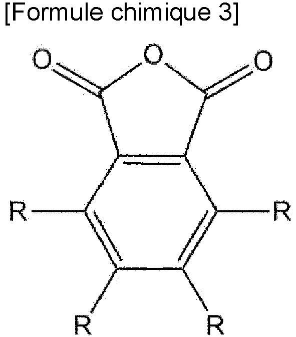
dans les Formules chimiques 1 à 3,
les R sont chacun identiques ou différents, et sont un hydrogène, un groupe alkyle substitué ou non substitué, un groupe cycloalkyle substitué ou non substitué, un groupe aryle substitué ou non substitué ou un groupe hétéroaryle substitué ou non substitué.

2. Solution électrolytique pour la batterie rechargeable au lithium-soufre selon la revendication 1, dans laquelle le composé anhydride cyclique est représenté par l'une quelconque des Formules chimiques 1-1 à 1-3 :

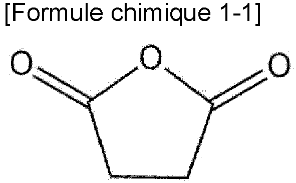

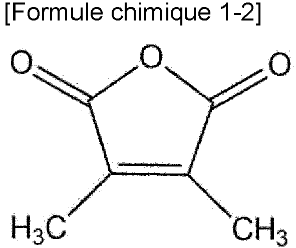

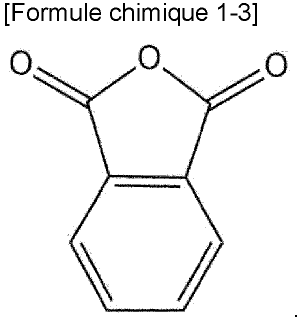

3. Solution électrolytique pour la batterie rechargeable au lithium-soufre selon la revendication 1, dans laquelle la teneur en composé anhydride cyclique est 0,1 % en poids à 10 % en poids du poids total de la solution électrolytique.

4. Solution électrolytique pour la batterie rechargeable au lithium-soufre selon la revendication 1, comprenant en outre un composé à base d'acide nitrique.

5. Solution électrolytique pour la batterie rechargeable au lithium-soufre selon la revendication 4, dans laquelle le composé à base d'acide nitrique est un ou plusieurs éléments sélectionnés dans le groupe constitué de nitrate de lithium, nitrate de potassium, nitrate de césium, nitrate de baryum, nitrate d'ammonium, nitrate de méthyle, nitrate d'imidazolium de dialkyle, nitrate de guanidine, nitrate de imidazolium et nitrate de pyridinium.

6. Batterie rechargeable au lithium-soufre comprenant,
la solution électrolytique selon l'une quelconque des revendications 1 à 5 ;
une électrode positive ;
une électrode négative ; et
un séparateur.
